# FASCICULE DE BREVET EUROPEEN

(11) **EP 0 721 390 B1**
(45) Date de publication et mention de la délivrance du brevet: **31.03.2004**
(21) Numéro de dépôt: 95927750.0
(22) Date de dépôt: 02.08.1995
(51) Int. Cl.: B23K 9/022, B23K 9/133

(54) **APPAREILLAGE PORTATIF PERFECTIONNE DE SOUDURE ELECTRIQUE SOUS ATMOSPHERE GAZEUSE**
TRAGBARE ABWICKELVORRICHTUNG FÜR EINEN SCHWEISSDRAHT
PORTABLE EQUIPMENT FOR UNWINDING WELDING WIRE

(30) Priorité: 03.08.1994 FR 9409923
(43) Date de publication de la demande: 17.07.1996
(73) Titulaire: Maltzeff, Yves, 42000 Saint-Etienne (FR)
(72) Inventeur: MALTZEFF, Yves, F-42000 Saint-Etienne (FR); LACOUR, J., C., F-42210 Montrond-les-Bains (FR)
(86) Numéro de dépôt international: PCT/FR1995/001045
(87) Numéro de publication internationale: WO 1996/004096

(56) Documents cités:
- EP-A- 0 338 583
- DE-A- 2 811 940
- DE-A- 4 130 109
- FR-A- 2 518 000
- US-A- 3 016 451
- US-A- 3 339 057
- US-A- 3 581 053
- US-A- 5 079 405

## Description

L'objet de l'invention se rattache principalement au secteur technique des moyens et installations de soudure électrique manuelle du type à eau-gaz-électricité, et fil d'apport.

On connait différents appareils de soudure électrique sous atmosphère gazeuse par exemple du type comprenant une torche d'arrivée de l'eau de refroidissement, du gaz inerte et du courant électrique, la torche étant reliée à un poste de distribution desdites énergies.

Dans certains appareils, la soudure s'opère de manière entièrement manuelle, en ce sens que l'opérateur tient la torche d'une main et les baguettes de fil d'apport de l'autre main.

Ce type d'appareil exige une main d'oeuvre très qualifiée et ne permet pas un rendement important du fait que le travail est minutieux, fatigant et exige des préparations et manipulations importantes (bridages des pièces à souder, réglages de puissance. De plus, le prix de revient est prohibitif (coût de la main d'oeuvre, des baguettes d'apport, des bridages...)

A titre indicatif, sur huit heures de travail, l'opérateur soude seulement un quart du temps.

A noter que l'on ne peut généralement souder qu'en "poussant" et qu'il n'est pas toujours aisé de réaliser une soudure d'accès difficile.

D'autres appareils plus évolués mettent en oeuvre un fil d'apport enroulé sur une bobine à alimentation automatique, ce qui diminue le prix de revient, mais cette bobine est disposée directement sur la torche déjà relativement lourde, et on comprend que ce poids supplémentaire, même équilibré, est pénible pour l'opérateur et ne lui permet pas en fait de gagner du temps et d'alléger sa fatigue.

Selon certaines machines de soudage électrique en automatique, la torche est aménagée pour recevoir un fil d'apport alimenté automatiquement et selon un mouvement continu ou intermittent pas à pas, afin d'obtenir un cordon de soudure régulier, mais on comprend qu'une telle installation ne peut réellement s'appliquer qu'à des soudures simples (rectilignes, bien accessibles....).

En particulier, le document US-A-3 339 057 décrit un appareillage selon le préambule de la revendication 1.

L'appareillage selon l'invention remédie à ces inconvénients, et apporte de nombreux avantages, en ce sens qu'il permet de réaliser manuellement et très facilement des soudures même d'accès difficile, généralement sans avoir besoin de brider les pièces à souder du fait que l'opérateur a une main libre pour tenir l'une des pièces le temps de réaliser deux ou trois points de soudure.

Pour cela, l'invention propose un appareillage selon la revendication 1.

Selon une autre caractéristique, la poignée de préhension à commande unique de la torche est montée à rotation libre ou contrôlée sur le corps de ladite torche, afin d'être parfaitement adaptée quelque soit la position de la soudure à effectuer.

Une autre caractéristique se trouve dans le fait que le dispositif de guidage du fil d'apport au niveau de la torche est conformé pour obtenir une arrivée rectiligne de l'extrémité dudit fil selon un angle d'environ 30° par rapport à l'axe de la torche, au niveau de la buse de sortie.

Selon une autre caractéristique, la commande unique de fusion et d'avance du fil d'apport, est réalisée par un levier articulé sur la poignée de préhension et coopérant par sa face arrière avec deux organes ou saillies dimensionnés pour que sous une première et légère impulsion, le premier organe prenne contact avec un moyen de mise sous tension du courant du gaz et de l'eau de refroidissement nécessaires à la fusion, puis dans une deuxième impulsion plus importante le deuxième organe prenne contact avec un dispositif d'actionnement des moyens d'avance du fil d'apport.

Une autre caractéristique se trouve dans le fait que les moyens d'entraînement pas à pas du fil d'apport sont constitués par un moteur basse tension à vitesse variable actionnant en rotation, par l'intermédiaire d'une transmission appropriée, un galets à position fixe sur lequel est positionné le fil d'apport qui est entrainé par pression obtenue par un contre-galet réglable.

Selon une autre caractéristique, les moyens de déplacement rectiligne alternatif du fil d'apport sont constitués par une came ou bielle ou similaire, réglable, entraînée par un moteur basse tension et agissant sur un galet porté par un disque-support des galets de pression du fils, afin de déplacer en translations alternatives guidées ledit disque rappelé élastiquement en position de retrait du fil d'apport.

Ces caractéristiques et d'autres encore ressortiront de la description qui suit.

Pour fixer l'objet de l'invention, sans toutefois le limiter, dans les dessins annexés :
- la figure 1 est une vue générale a caractère schématique de l'appareillage selon l'invention.
- la figure 2 est une vue transversale en coupe partielle illustrant le guidage et l'entrainement du fil d'apport.

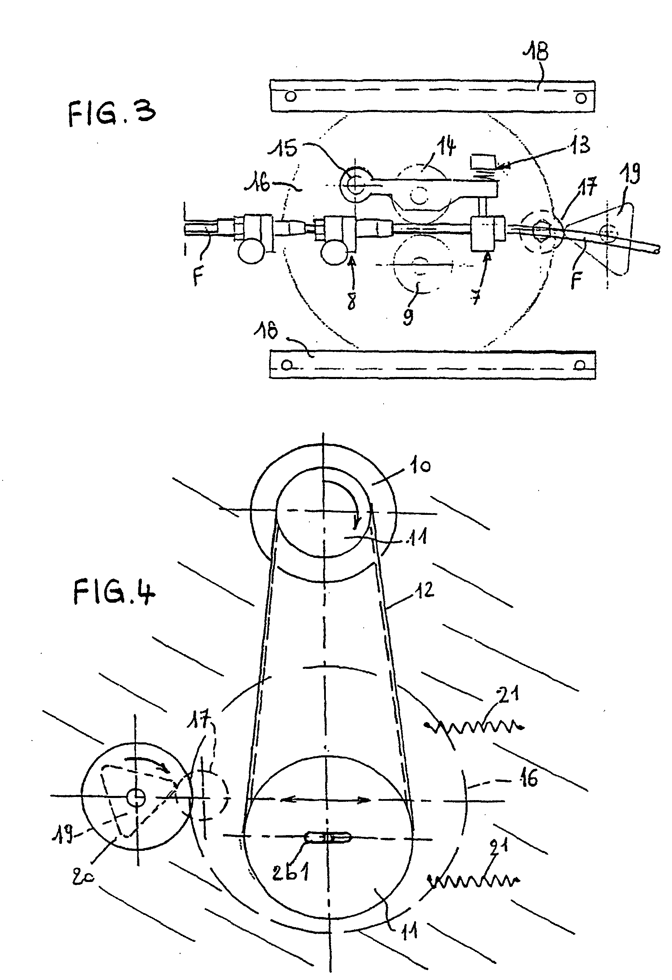

- la figure 3 est une vue avant à plus grande échelle du guidage et de l'entrainement du fil d'apport.
- la figure 4 est une vue arrière à plus grande échelle de l'entrainement du fil d'apport.
- la figure 5 est une vue à caractère schématique de la torche selon l'invention.
- la figure 6 est une vue en coupe considérée suivant la ligne 6-6 de la figure 5 montrant la poignée de préhension rotative.
- La figure 7 est une vue en bout considérée suivant la ligne 7-7 de la figure 5.

Afin de rendre plus concret l'objet de l'invention, on le décrit maintenant sous des formes non limitatives de réalisation illustrées aux figures des dessins.

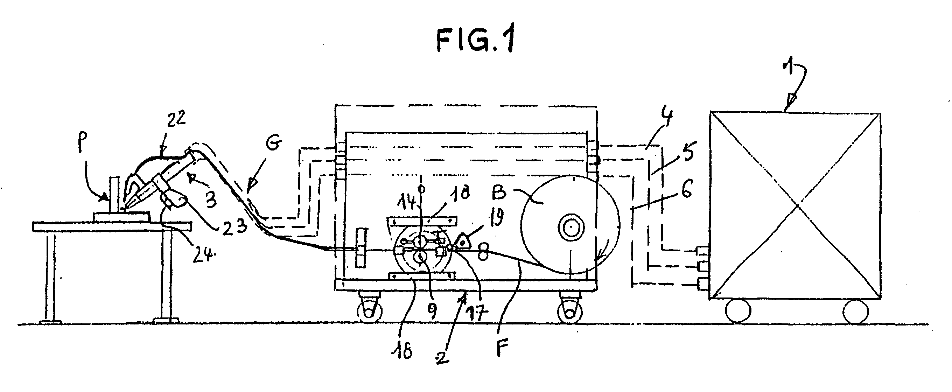

L'appareillage selon l'invention et illustré notamment à la figure 1 comprend essentiellement un poste (1) bien connu de distribution d'énergie (électricité, gaz inerte, eau de refroidissement), un chariot (2) d'alimentation du fil d'apport, et une torche (3) ; des canalisation et câbles souples (4,5,6), d'électricité, de gaz et d'eau relient le poste (1) et la torche (3) en passant éventuellement par le chariot (2).

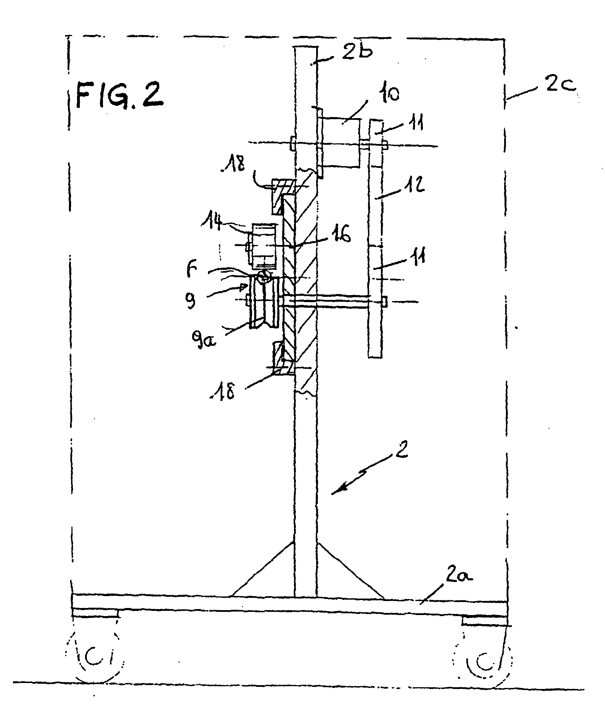

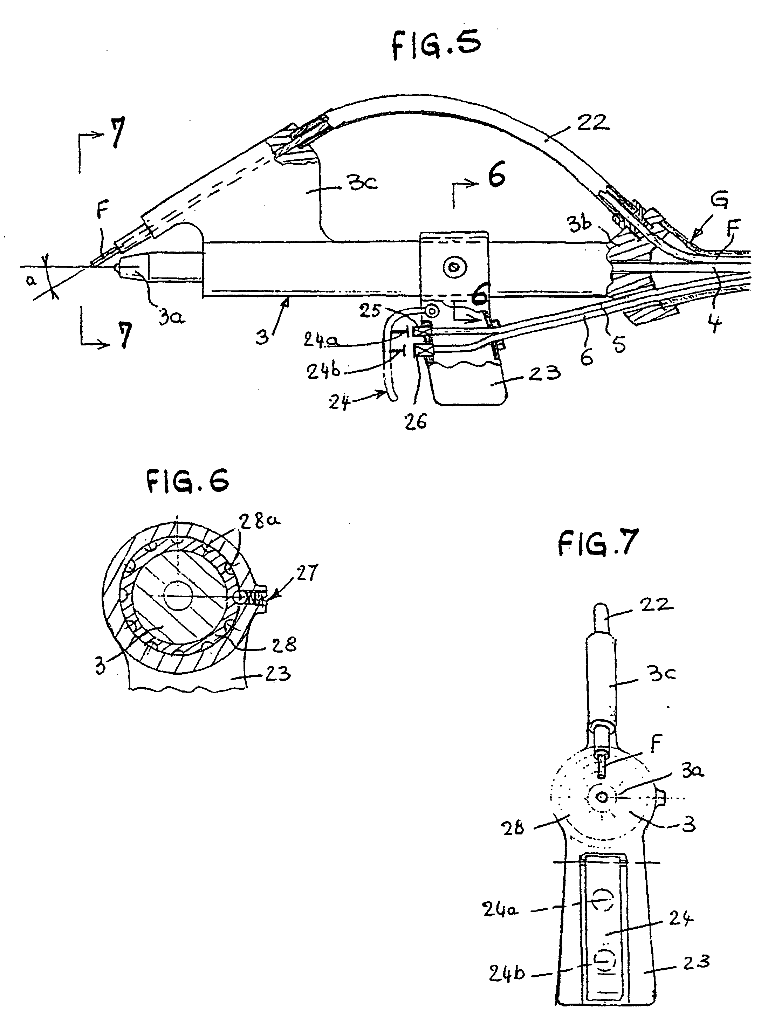

Le chariot (2) se présente par exemple sous la forme d'un piètement roulant (2a) surmonté d'une platine-support (2b) recevant les différents mécanismes ; l'ensemble étant de préférence enfermé dans un carter (2c) sur une face de la platine-support et près d'une extrémité est fixée en rotation freinée de préférence, une bobine (B) de fil d'apport (F) qui est ensuite amené à deux guide-fils (78) situés de part et d'autre de moyens d'entrainement en pression dudit fil. Les moyens d'entrainement du fil sont constitués par un galet (9) à position fixe et recevant le fil d'apport de préférence dans une gorge de centrage (9a). Comme illustré aux figures 2 et 4, le galet (9) est relié à un moteur basse tension (10) à vitesse règlable et fixé à la platine-support et par l'intermédiaire d'une transmission appropriée du type poulies crantées (11) et courroie crantée (12) par exemple.

Le fil d'apport est acheminé en continu à très haute vitesse de un mouvement à mille mouvements minute et pas à pas.

Le fil d'apport est entrainé par appui en pression réglable (13) d'un deuxième galet de contre-appui (14) articulé en (15) sur un disque-support (16) portant les guides-fils (7,8), le galet (9) et le galet de contre-appui (14), ainsi qu'un troisième galet (17) à sa périphérie.

Le disque-support (16) est monté à coulissement guidé sur la platine-support par des glissière (18) et par une lumière (2b1) de la platine-support, les mouvements rectilignes du disque support étant engendrés par une came (19) par exemple de profil triangulaire, qui est entrainée en rotation par un moteur basse tension (20) à vitesse réglable pour repousser périodiquement le disque-support par appui sur le galet (17) ; le recul du disque-support étant obtenu par tous moyens de rappel élastique (21).

On comprend qu'en combinant judicieusement l'entraînement du fil d'apport par les galets (9, 14) et les mouvements alternatifs du disque-support (16) par la came (19) et le galet (17), on obtient simultanéement un mouvement de va et vient et une avance du fil d'apport.

En variante, on peut prévoir des cames de profils différents et interchangeables suivant les mouvements à obtenir.

De même, l'action de la came peut être débrayée par tous moyens, ou bien encore les mouvements alternatifs du disque-support peuvent être obtenus par d'autres moyens que la came, par exemple piston, vérin, électroaimant....

Ledit fil d'apport ainsi entrainé, est acheminé au niveau de la buse de sortie (3a) de la torche de soudage (3).

D'une manière avantageuse, le fil d'apport et les canalisations et câbles souples (4,5,6) sont réunis dans une gaine unique (G) raccordée à la partie arrière (3b) du corps de la torche.

Le fil d'apport est déployé en arc de cercle dans une gaine (22) maintenue entre la partie arrière (3b) et un guide avant (3c) positionné de manière inclinée d'un angle (a) d'environ 30 ° par rapport à l'axe du corps de la torche, de telle sorte que le fil d'apport soit rectiligne dans sa partie terminale.

A noter que les réglages d'avance du fil sont établis de manière à ce que en position arrêt, le fil d'apport soit reculé et ne dépasse pas de l'extrémité du guide, ce qui évite de le coupe avant chaque opération

La torche présente dans sa partie médiane une poignée de préhension (23) dans laquelle arrivent les câbles (5-6) de commande du courant de fusion et d'avance du fil d'apport. Selon une caractéristique importante ces deux commandes sont actionnées par un seul et unique levier (24), mais en deux temps. Par une première et légère impulsion sur le levier, un premier organe en saillie (24a) sur sa face arrière prend contact avec un moyen (25) de mise sous tension du courant, du gaz de l'eau de refroidissement nécessaires à la fusion tandis que dans une deuxième impulsion plus importante, un deuxième organe en saillie (24b) prend contact avec un dispositif (26) d'actionnement des moyens d'avance du fil d'apport.

On peut donc ainsi, dans une action continue, opérer la fusion des pièces (P) souder puis alimenter la zone de fusion en fil d'apport cela d'une seule main, l'autre pouvant par exemple tenir les pièces.

D'autre part, la poignée de préhension (23) est montée à rotation sur le corps afin de pouvoir l'orienter à volonté suivant la disposition de la soudure à effectuer. De préférence, cette rotation est contrôlée par exemple et comme illustré à la figure 6 par indexations multiples du type bille à ressort (27) dans le corps de la torche coopérant avec des alvéoles (28a) réalisées sur une bague (28) emmanchée autour du corps de la torche.

A noter que la vitesse d'avance du fil peut être réglée directement sur la torche par potentiomètre notamment.

Bien entendu, les applications d'un tel appareillage sont multiples étant donné son caractère portatif, sa facilité d'emploi et ses nombreuses possibilités d'adaptation. De même, il est parfaitement possible d'automatiser l'appareillage dans une application particulière en usine.

A noter encore que l'on utilisera au maximum des matériaux isolants dans les différents composants afin d'éviter les remontées de courant haute fréquence.

Les avantages ressortent bien de la description, on souligne encore :
- la commande unique de fusion et d'avance du fil :

- la poignée de préhension tournante ;
- les mouvements d'avance et alternatifs réglables du fil reproduisant le travail du soudeur utilisant une baguette ;
- l'arrivée du fil rectiligne au niveau de la buse,
- la facilité d'exécution de toutes soudures ne nécessitant pas de main d'oeuvre qualifiée,
- le travail facilité du soudeur lui évitant une fatigue génératrice d'accidents,
- le travail de soudure aussi bien en "poussant" qu'en "tirant",
- la possibilité de prendre un masque avec la main libre ce qui est moins désagréable qu'un casque,
- le rendement nettement amélioré du fait des facilités de travail.
- la possibilité d'opérer partout sur chantiers, en usine, au domicile.......

## Revendications

1. Appareillage portatif perfectionné de soudure électrique sous atmosphère gazeuse comprenant à partir d'un poste (1) de distribution d'énergie :
- une unité (2) de distribution du fil d'apport (F) continu présenté en bobine (B) supportant des moyens (2, 10, 11, 12, 14) d'entraînement pas à pas du fil d'apport dévidé à très haute vitesse et à une fréquence de un à mille mouvements par minute.
- une torche de soudage (3) équipée d'un dispositif de guidage (3c, 22) du fil d'apport, d'une poignée de préhension (23) à commande unique (24) pour la fusion des pièces à souder (P) et pour l'avance du fil d'apport, **caractérisé en ce que** ladite unité (2) de distribution est un charriot qui supporte en outre des moyens (16, 17, 18, 19, 20) de déplacement rectiligne alternatif dudit fil : lesdits moyens étant combinés avec les moyens d'entraînement du fil; l'avance du fil se faisant selon une cinématique reproduisant exactement les mouvements d'un opérateur utilisant une baguette de soudure classique.

2. Appareillage selon la revendication 1, **caractérisé en ce que** le poignée de préhension (23) à commande unique de la torche est montée à rotation libre ou contrôlée sur le corps de ladite torche, afin d'être parfaitement adaptée quelque soit la position de la soudure à effectuer.

3. Appareillage selon la revendication 1, **caractérisée en ce que** le dispositif de guidage (3c) du fil d'apport au niveau de la torche (3) est conformé pour obtenir une arrivée rectiligne de l'extrémité dudit fil selon un angle d'environ 30° par rapport à l'axe de la torche, au niveau de la buse de sortie (3a).

4. Appareillage selon la revendication 1, **caractérisé en ce que** la commande unique de fusion et d'avance du fil d'apport, est réalisée par un levier (24) articulé sur la poignée de préhension (23) et coopérant par sa face arrière avec deux organes (24a-24b) en saillies dimensionnés pour que sous une première et légère impulsion', le premier organes (24a) prenne contact avec un moyen (25) de mise sous tension du courant, du gaz, et de l'eau de refroidissement nécessaires à la fusion, puis dans une deuxième impulsion plus importante, le deuxième organe (24b) prenne contact avec un dispositif (26) d'actionnement des moyens d'avance du fil d'apport.

5. Appareillage selon la revendication 1, **caractérisée en ce que** les moyens d'entrainement pas à pas du fil d'apport sont constitués par un moteur (10) basse tension à vitesse variable actionnant en rotation, par l'intermédiaire d'une transmission appropriée (11-12), un galet (9) à position fixe sur lequel est positionné le fil d'apport qui est entrainé par pression obtenue par un contre-galet règlable (14).

6. Appareillage selon la revendication 5, **caractérisé en ce que** le galet moteur (9) présente une gorge (9a) de centrage du fil d'apport (F).

7. Appareillage selon la revendication 1, **caractérisé en ce que** les moyens de déplacement rectiligne alternatif du fil d'apport sont constitués par une came (19) entrainée par un moteur basse tension (20) à vitesse variable et agissant sur un galet (17) porté par un disque-support (16) des galets (9-14) de pression du fil, afin de déplacer en translations alternatives guidées ledit disque rappelé élastiquement en position de retrait du fil d'apport.

8. Appareillage selon la revendication 1, **caractérisé en ce que** la bobine (B) de fil, d'apport est montée à rotation freinée sur une platine-support (2b) du chariot.

9. Appareillage selon la revendication 7, **caractérisé en ce que** la came (19) est interchangeable, chaque came étant de profil adapté aux mouvements alternatifs à obtenir.

10. Appareillage selon l'une quelconque des revendications 1 à 4, **caractérisé en ce que** le fil d'apport (F), les canalisations et câbles (4,5,6) sont réunis dans une gaine unique (G) entre le chariot (2) et la torche (3).

11. Appareillage selon la revendication 1, **caractérisé en ce que** la vitesse d'avance du fil d'apport (F) est réglable directement par potentiomètre notamment, sur la torche (3).

## Patentansprüche

1. Verbessertes tragbares Schutzgas- und Elektroschweißgerät, das ausgehend von einer Energieverteilungsstation (1) folgende Bauteile umfaßt:
- eine Verteilergruppe (2) für den durchgehenden Schweißdraht (F) auf Spule (B) mit den aufgebauten Bauteilen (2, 10, 11, 12, 14) für den Schrittantrieb des mit Hochgeschwindigkeit und einer Frequenz von 1 bis 100 Bewegungen pro Minute abgerollten Schweißdrahts und den Bauteilen (16, 17, 18, 19, 20) für geradlinige Bewegungen des besagten Drahts in beiden Richtungen, wobei die besagten Bauteile mit den Bauteilen des Drahtantriebs verbunden sind.
- einen Schweißbrenner (3) mit Führungsvorrichtung (3c, 22) für den Schweißdraht, einem Haltegriff (23) mit einheitlicher Steuerung (24) zum Binden der zu schweißenden Teile (P) und zum Vorschub des Schweißdrahts, **dadurch gekennzeichnet, daß** besagte Verteilerstation (2) ein Schlitten ist, der unter anderem die Bauteile (16, 17, 18, 19, 20) für geradlinige Bewegungen des Drahts in beide Richtungen trägt; , wobei die besagten Bauteile mit den Bauteilen des Drahtantriebs verbunden sind und der Vorschub des Schweißdrahts gemäß einer Kinematik erfolgt, die exakt die Bewegungen eines Schweißers mit einer herkömmlichen Schweißelektrode nachahmt.

2. Gerät gemäß Anforderung 1, **gekennzeichnet dadurch, daß** der Haltegriff (23) mit einheitlicher Steuerung der Elektrode frei oder zwangsläufig drehbar auf dem Körper der besagten Elektrode angebaut ist, um an alle denkbaren Positionen für die auszuführende Schweißung angepaßt zu sein.

3. Gerät gemäß Anforderung 1, **gekennzeichnet dadurch, daß** die Führungsvorrichtung (3c) für den Schweißdraht im Bereich des Schweißbrenners (3) geeignet ist, um an der Ausgangsdüse (3a) ein geradliniges Auftreffen des besagten Drahtes in einem 30° Grad Winkel zur Achse des Brenners zu erreichen.

4. Gerät gemäß Anforderung 1, **gekennzeichnet dadurch, daß** die einheitliche Steuerung zum Binden und zum Vorschub des Schweißdrahts durch einen Hebel (24) gewährleistet wird, der gelenkig auf dem Haltegriff (23) gelagert ist und über seine Hinterseite mit zwei hervorstehenden Elementen (24a - 24b) zusammenarbeitet, die so bemessen sind, daß bei einem ersten leichten Druck, das erste Element (24a) ein Bauteil (25) für die zum Binden notwendige Zufuhr von Strom, Gas und Kühlflüssigkeit berührt und auf einen zweiten, stärkeren Druck hin, das zweite Bauteil (24b) eine Vorrichtung (26) zur Betätigung des Vorschubs für den Schweißdraht berührt.

5. Gerät gemäß Anforderung 1, **gekennzeichnet dadurch, daß** die Elemente des Schrittantriebs für den Schweißdraht aus einem Niederstrom Regelmotor (10) bestehen, der in Drehung über ein passendes Getriebe (11-12) eine feststehende Rolle (9) antreibt, auf der ein Schweißdraht liegt, der wiederum durch den Druck einer verstellbaren Gegenrolle (14) mitgenommen wird.

6. Gerät gemäß Anforderung 5, **gekennzeichnet dadurch; daß** die motorisierte Rolle (9) eine Rinne (9a) zum Zentrieren des Schweißdrahts (F) aufweist.

7. Gerät gemäß Anforderung 1, **gekennzeichnet dadurch, daß** die Elemente zum geradlinigen Verfahren des Schweißdrahts in beiden Richtungen aus einer Nocke (19) bestehen, die durch einen Niederstrom Regelmotor (20) angetrieben wird, der auf eine Rolle (17) einwirkt, die von einer Tragscheibe (16) der Druckrollen (9-14) für den Schweißdraht gehalten wird, um besagte Scheibe, die während des Abrollen des Schweißdrahts elastisch zurückgehalten wird, beidseitig in Querrichtung geführt zu bewegen.

8. Gerät gemäß Anforderung 1, **gekennzeichnet dadurch, daß** die Schweißdrahtspule (B) in gebremster Rotation auf einer Halteplatte (2b) des Schlittens angebracht ist.

9. Gerät gemäß Anforderung 7, **gekennzeichnet dadurch, daß** die Nocke (19) austauschbar ist, da alle Nocken vom Profil her an die zu erzielenden beidseitigen Bewegungen angepaßt sind.

10. Gerät gemäß einer der Anforderungen 1 bis 4, **gekennzeichnet dadurch, daß** der Schweißdraht (F), die Leitungen und Kabel (4, 5, 6) in einem einzigen Schlauch (G) zwischen Schlitten (2) und Schweißbrenner (3) zusammengefaßt sind.

11. Gerät gemäß Anforderung 1, **gekennzeichnet dadurch, daß** die Vorschubgeschwindigkeit des Schweißdrahts (F) direkt auf dem Schweißbrenner (3) eingestellt werden kann, vor allem über ein Potentiometer

## Claims

1. Perfected portable electric welding unit in gas atmosphere including from an energy distribution station (1) :
- A unit (2) for the continuous feed of a filler wire (F) in a reel (B) supporting means (2, 10, 11, 12, 14) to drive step by step the filler wire unwound at a very high speed and a frequency of one to one thousand movements a minute, means (16, 17, 18, 19, 20) of alternating rectilinear movement of the said wire : the said means being combined with the wire drive means.
- welding torch (3) fitted with a guide device (3c,22) for the filler wire, a gripping handle (23) with single control (24) for the melting of the parts to be welded (P) and to feed the filler wire wherein the said feed unit (2) is a trolley which supports in addition means (16, 17, 18, 19, 20) of alternating rectilinear movement of the wire; the said means being combined with the wire drive means; the wire being fed according to cinematics reproducing exactly the movements of an operator using a conventional welding rod.

2. Unit according to claim 1 wherein the single control gripping handle (23) of the torch is mounted so as to rotate in a free or controlled manner on the body of the said torch in order to be fully adapted regardless of the position of the welding to be performed.

3. Unit according to claim 1 wherein the guide device (3c) of the filler wire at the torch (3) is shaped to obtain a rectilinear inlet of the end of the said wire according to an angle of approximately 30° with respect to the centre line of the torch at the outlet nozzle (3a).

4. Unit according to claim 1 wherein the single filler wire melting and feed control is performed by a lever (24) hinged on the gripping handle (23) and cooperating by its rear face with two projecting components (24a-24b) sized so that urged by a first and light pulse, the first component (24a) comes into contact with the means (25) to start up the current, the gas and the cooling water required for the melting, then in a second stronger pulse, the second component (24b) comes into contact with a device (26) actuating the filler wire feed means.

5. Unit according to claim 1 wherein the step-by-step filler wire drive means are made up of a low voltage variable speed motor (10) activating the rotation via a suitable transmission (11-12), of a roller (9), with fixed position on which is positioned the filler wire which is driven by pressure obtained by an adjustable counter roller (14).

6. Unit according to claim 5 wherein the drive roller (9) has a groove (9a) for centring the filler wire (F).

7. Unit according to claim 1 wherein the means for the alternating rectilinear movement of the filler wire are made up of a cam (19) driven by a low voltage variable speed motor (20) and acting on a roller (17) supported by a support disc (16) of the wire pressure rollers (9-14), in order to move in alternative guided translation the said disc elastically returned to the filler metal withdrawn position.

8. Unit according to claim 1 wherein the reel (B) of filler metal is mounted with braked rotation on a support plate (2b) of the trolley.

9. Unit according to claim 7 wherein the cam (19) is interchangeable, each cam having the profile adapted to the alternating movements to be obtained.

10. Unit according to any one of claims 1 to 4 wherein the filler wire (F), the pipes and the cables (4, 5, 6) are brought together in a single sheath (G) between the trolley (2) and the torch (3).

11. Unit according to claim 1 wherein the filler wire (F) feed speed is directly adjustable by a knob namely on the torch (3).
